# EUROPÄISCHE PATENTANMELDUNG

(11) **EP 2 533 147 A2**
(43) Veröffentlichungstag der Anmeldung: **12.12.2012**
(21) Anmeldenummer: 12171549.4
(22) Anmeldetag: 11.06.2012
(51) Int. Cl.: G06F 3/048

(54) **Eingabe von Befehlen auf einer berührungssensitiven Oberfläche eines elektronischen Gerätes**

(30) Priorität: 10.06.2011 DE 102011106129
(71) Anmelder: Deutsche Telekom AG, 53113 Bonn (DE)
(72) Erfinder: Hinze, Henner, 53177 Bonn (DE); Hofmann, Tobias, 53111 Bonn (DE); Lihs, Martin, 99423 Weimar (DE); Steinkuhle, Axel, 50733 Köln (DE)
(74) Vertreter: Schrooten, Rolf

(57) **Zusammenfassung**

Die Erfindung betrifft ein Verfahren zur Eingabe von Befehlen (A', B') und zur Ausführung von mit den Befehlen (A', B') verknüpften Funktionen (A", B") eines elektronischen Gerätes, wobei die Befehlseingabe durch Berührung (A, B, R) einer berührungssensitiven Eingabeoberfläche des Gerätes mit einem Zeigemittel erfolgt, und wobei eine durch Ausführung zumindest einer Bewegungsgeste (A, B) auf der Eingabeoberfläche ausgelöste Funktion (A", B") des Gerätes erneut ausgeführt wird, wenn die Eingabeoberfläche nach der Ausführung der Bewegungsgeste erneut mit dem Zeigemittel berührt und das Zeigemittel ohne Ausführung einer Bewegungsgeste auf der Eingabeoberfläche wieder von der Eingabeoberfläche entfernt (R) wird. Die Erfindung betrifft ferner elektronische Geräte oder Vorrichtungen, insbesondere Computer oder mobile Endgeräte, die zur Durchführung dieses Verfahrens geeignet sind.

## Beschreibung

Die vorliegende Erfindung betrifft ein Verfahren zur Eingabe von Befehlen und zur Ausführung von mit den Befehlen verknüpften Funktionen eines elektronischen Gerätes. Die Befehlseingabe erfolgt durch Berührung einer berührungssensitiven Eingabeoberfläche des Gerätes mit einem Zeigemittel, wobei die berührungssensitive Eingabeoberfläche vorzugsweise ein Touchscreen ist und als Zeigemittel insbesondere mindestens eine Fingerspitze verwendet werden kann.

Derartige Verfahren sind insbesondere bei Computern und mobilen Endgeräten allgemein bekannt. Die Befehlseingabe dient beispielsweise dazu, auf dem Gerät eine bestimmte Funktion zu einem oder mehreren Objekten auszuführen. Als Objekte kommen beispielsweise Icons oder Dateien, etwa Audio- oder Videodateien in Betracht, zu denen als Funktionen beispielsweise ein Speicher- oder Sendevorgang, das Öffnen bzw. Wiedergeben einer Datei oder ein Vorspul- oder Rückspulvorgang ausgeführt werden soll.

Um die Aktion auszuführen wird die Eingabeoberfläche, insbesondere ein darauf in einer graphischen Benutzeroberfläche angezeigtes Feld, Icon oder Objekt mit dem Zeigemittel berührt. Gegebenenfalls wird das Zeigemittel auch auf der Eingabeoberfläche bewegt, um so Zieh- oder Wischbewegungen auszuführen, die als Eingabegesten ebenfalls zur Befehlseingabe dienen.

Die an sich hinreichend bekannte berührungssensitive Eingabeoberfläche registriert die von einem Benutzer darauf ausgeführten Berührungen und/oder Bewegungen und sendet entsprechende Signale an eine Steuerung des Gerätes, die diese Signale verarbeitet und die mit der ausgeführten Berührung bzw. Bewegung verknüpften Funktionen ausführt.

Zur Auslösung bestimmter Funktionen sind Bewegungsgesten unterschiedlicher Komplexität bekannt. So gibt es beispielsweise relativ einfach mit einer geradlinigen Bewegung auszuführenden Eingabegesten, aber auch bogen- oder kreisförmig auszuführende sowie aus mehreren in unterschiedlichen Richtungen auszuführenden Bewegungen zusammengesetzte Eingabegesten. Darüber hinaus sind inzwischen auch Befehiseingaben bekannt, bei denen mit mehreren Fingerspitzen gleichzeitig bestimmte Berührungen und/oder Bewegungen ausgeführt werden (Multitouch).

Wenn bestimmte Eingabegesten beispielsweise bei einer größeren Anzahl von Objekten zur wiederholten Ausführung einer bestimmten Funktion an diesen Objekten in entsprechend großer Anzahl mehrfach wiederholt eingegeben werden müssen, kann dies für den Benutzer mühsam sein.

Aus der US 2008/0316183 A1 ist ein Verfahren der eingangs genannten Art für Touchscreen-Tastaturen bekannt, bei dem die mit einer Geste verknüpfte Funktion wiederholt ausgeführt wird, wenn das Zeigemittel nach Ausführung der Geste für eine bestimmte Zeitdauer auf dem Touchscreen gehalten wird. Die Funktionswiederholung erfolgt also erst nach Verstreichen einer vorgegebenen Zeitspanne, was stets eine gewisse Verzögerung bei der Bedienung bedeutet. Die genaue Anzahl der Funktionswiederholungen ist dabei allerdings bei Wiederholungsintervallen von 100-500 ms vom Benutzer nicht oder nur sehr schwer steuerbar.

Aufgabe der vorliegenden Erfindung ist es, ein Verfahren der eingangs genannten Art bereitzustellen, das bei wiederholt auszuführenden Funktionen eine vereinfachte Bedienung und somit einen größeren Komfort für den Benutzer bietet. Dabei soll auch eine besonders schnelle und hinsichtlich der Anzahl von Funktionswiederholungen exakt steuerbare Bedienung möglich sein.

Diese Aufgabe wird erfindungsgemäß durch ein Verfahren nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass eine Funktion des Gerätes, die durch eine Bewegungsgeste oder durch mehrere Bewegungsgesten auf der Eingabeoberfläche ausgelöst wird, nach der ersten Ausführung erneut ausgeführt wird, wenn die Eingabeoberfläche nach der Eingabe der Bewegungsgeste(n) erneut mit dem Zeigemittel berührt wird und das Zeigemittel ohne Ausführung einer Bewegungsgeste auf der Eingabeoberfläche wieder von der Eingabeoberfläche entfernt wird.

Ein wesentlicher Grundgedanke der Erfindung liegt also darin, den zuletzt durch mindestens eine Bewegungsgeste ausgelösten Befehl zu wiederholen, wenn das nach Ausführung der Bewegungsgeste(n) von der Eingabeoberfläche abgehobene Zeigemittel unmittelbar anschließend oder zu einem späteren Zeitpunkt die Eingabeoberfläche an einer Stelle erneut berührt und dann wieder von dieser Stelle der Eingabeoberfläche entfernt wird, ohne während der Berührung eine Bewegungsgeste auf der Eingabeoberfläche auszuführen.

Diese Wiederholung des Befehls bzw. die Wiederholung der hiermit verbundenen Funktionsausführung kann gegebenenfalls auch mehrfach hintereinander erfolgen, indem die Eingabeoberfläche entsprechend mehrfach erneut berührt und jeweils ohne Ausführung einer Bewegung auf der Eingabeoberfläche wieder verlassen wird. Dabei kann der Benutzer die genaue Anzahl der Funktionswiederholungen exakt steuern.

Der Hauptvorteil besteht darin, dass die Bedienung des Gerätes bei einer wiederholten Ausführung bestimmter Funktionen erheblich vereinfacht wird. Bei jeder gewünschten Wiederholung der Funktion muss als Befehlseingabe nicht mehr die entsprechende Bewegungsgeste oder die entsprechende Folge von Bewegungsgesten ausgeführt werden, sonder es reicht jeweils eine einfache Berührung der Oberfläche aus. Der Benutzer spart also bei jeder Wiederholung einer Funktion die zur erstmaligen Funktionsauslösung erforderliche Ausführung der hiermit verbundenen gegebenenfalls komplexen Bewegungsgeste(n), was gerade bei einer großen Anzahl von Wiederholungen einen deutlichen Gewinn an Komfort und Zeit bedeuten kann.

Die wiederholte Ausführung eines zuvor eingegebenen Befehls bzw. die wiederholte Auslösung einer damit verknüpften Funktion unterbleibt bei einer nachfolgend ausgeführten Berührung der Eingabeoberfläche erst dann, wenn bei dieser danach ausgeführten Berührung eine beliebige Bewegungsgeste auf der Eingabeoberfläche ausgeführt wird.

Als Beispiel sei das Durchblättern einer größeren Menge von Fotos in einem digitalen Fotoalbum genannt. Herkömmlicher Weise wird dabei ein gerade angezeigtes Foto durch die Ausführung einer zur Seite gerichteten Wisch-Bewegungsgeste seitlich verschoben, um so ein nächstes Foto anzeigen zu lassen. Bei jedem Foto-Wechsel muss hier also die gleiche Bewegungsgeste ausgeführt werden, die beispielsweise aus einer sich über eine Entfernung von einigen Zentimetern erstreckende Wischbewegung besteht.

Demgegenüber reicht es bei dem durch die erfindungsgemäße Funktionalität verbesserten Verfahren für das Durchblättern der Fotos aus, die Bewegungsgeste nur ein einziges Mal auszuführen, nämlich nur beim ersten Verschieben eines Fotos. Bei jedem sich daran anschließenden weiteren Verschiebevorgang eines Fotos genügt ein einfaches Berühren, etwa ein kurzes Antippen der Eingabeoberfläche bzw. des Touchscreens. Insbesondere beim Durchsuchen einer großen Menge von digitalen Fotos oder anderen Dateien stellt dies eine deutliche Vereinfachung der Bedienung dar. Besonders vorteilhaft ist es bei dem erfindungsgemäßen Verfahren, wenn die zuvor durch mindestens eine Bewegungsgeste ausgelöste Funktion nur dann erneut ausgeführt wird, wenn die Eingabeoberfläche innerhalb einer vorgegebenen oder vom Benutzer selbst festlegbaren Höchstzeitdauer berührt wird. Nach Ablauf dieser Höchstzeitdauer führt dann auch ein einfaches Berühren der Eingabeoberfläche nicht mehr zu einer Wiederholung der Funktion.

Gemäß einer ersten besonders bevorzugten Ausführungsform der Erfindung wird die zuvor durch mindestens eine Bewegungsgeste ausgelöste Funktion erneut von dem Gerät ausgeführt, wenn die Eingabeoberfläche nur kurz angetippt wird, ohne dabei eine Bewegungsgeste auf der Eingabeoberfläche auszuführen. Hierdurch wird eine besonders schnelle Wiederholung der Befehlseingabe ermöglicht.

Gemäß einer alternativen Ausführungsform der Erfindung wird vorgeschlagen, dass die zuvor durch mindestens eine Bewegungsgeste ausgelöste Funktion nur dann erneut ausgeführt wird, wenn die Eingabeoberfläche länger als eine erste vorbestimmte oder vorgebbare Mindestzeitdauer berührt wird, ohne dass während dieser Berührung eine Bewegungsgeste auf der Eingabeoberfläche ausgeführt wird. Es wird hierbei also zusätzlich noch die Dauer der anschließenden Berührung der Eingabeoberfläche erfasst, wodurch eventuelle Fehlauslösungen durch ein unbeabsichtigtes Antippen der Eingabeoberfläche verhindert werden können. Die Mindestzeitdauer kann entweder fest vorbestimmt oder vom Benutzer selbst eingestellt bzw. vorgegeben werden. Wesentlich ist allerdings auch bei dieser Variante des Verfahrens, dass die Funktionswiederholung zunächst ein Absetzen des Zeigemittels von der Eingabeoberfläche und anschließend ein erneutes Aufsetzen des Zeigemittels auf die Eingabeoberfläche erfordert.

Besonders vorteilhaft ist es bei dieser Variante ferner, wenn die zuvor durch mindestens eine Bewegungsgeste ausgelöste Funktion mehrfach wiederholt ausgeführt wird, wenn die Eingabeoberfläche länger als eine zweite vorbestimmte oder vorgebbare Mindestzeitdauer berührt wird, ohne während der Berührung eine Bewegungsgeste auf der Eingabeoberfläche auszuführen. Auch diese zweite Mindestzeit, die länger ist als die erste Mindestzeitdauer, kann entweder fest vorgegeben sein oder von dem Benutzer selbst bestimmt werden. Auf diese Weise kann der Befehl in der Art einer Auto-Repeat-Funktion solange wiederholt werden, wie das Zeigemittel die Eingabeoberfläche berührt. Erst wenn das Zeigemittel die Eingabeoberfläche wieder verlässt, wird die mit dem zuvor eingegebenen Befehl verbundene Funktion nicht mehr erneut ausgeführt.

Gemäß einer weiteren besonders bevorzugten Ausführungsvariante der Erfindung ist vorgesehen, dass die zuvor durch mindestens eine Bewegungsgeste ausgelöste Funktion nur dann erneut ausgeführt wird, wenn die Eingabeoberfläche danach mit dem Zeigemittel innerhalb eines vorgegebenen Feldes oder Bereichs berührt wird.

Besonders vorteilhaft ist es dabei, wenn mehrere Felder vorgegeben sind, die jeweils mit einer unterschiedlichen Anzahl von Wiederholungen der zuvor durch mindestens eine Bewegungsgeste ausgelösten Funktion verknüpft sind. So könnte beispielsweise durch einfaches Antippen eines bestimmten Feldes eine zuvor ausgelöste Funktion 10 mal wiederholt werden. Zum vorzeitigen Beenden der so ausgewählten Anzahl von Funktionswiederholungen kann eine erneute Berührung der Eingabeoberfläche insbesondere innerhalb eines hierfür vorgegebenen Feldes angeboten werden.

Besonders vorteilhaft ist es ferner, wenn die Wiederholung einer zuvor ausgelösten Funktion bei anschließender Berührung der Eingabeoberfläche ohne Ausführung einer Bewegungsgeste auf der Eingabeoberfläche unterbleibt bzw. beendet wird, wenn ein entsprechender Befehl zum Abbruch der erfindungsgemäßen Wiederholungsfunktionalität eingegeben wird, was insbesondere durch die Berührung eines hierfür vorgegebenen Feldes oder durch die Betätigung einer entsprechenden Taste erfolgen kann.

Die vorliegende Erfindung betrifft auch ein elektronisches Gerät oder eine elektronische Vorrichtung, das bzw. die zur Durchführung des vorangehend beschriebenen Verfahrens geeignet ist. Dazu ist vorteilhafterweise ein Prozessor vorgesehen, der zur Durchführung des Verfahrens konfiguriert oder konfigurierbar ist.

Vorzugsweise kann das erfindungsgemäße Verfahren auf einem insbesondere tragbaren Computer mit einer berührungssensitiven Eingabeoberfläche ausgeführt werden.

Vorteilhafterweise kann das erfindungsgemäße Verfahren auch auf einer Kommunikationsvorrichtung, insbesondere auf einem Mobiltelefon ausgeführt werden, welches mit einem Touchscreen ausgestattet ist.

Auch eine mittels Berührungen und Gesten auf einer berührungssensitiven Eingabeoberfläche steuerbare Bedienungseinheit für beliebige Geräte, Maschinen, Anlagen oder Vorrichtungen, beispielsweise eine Fernbedienung für Fernseher oder für Hifi-Anlagen, kann in vorteilhafter Weise zur Ausführung des erfindungsgemäßen Verfahrens eingerichtet sein.

Insbesondere bei diesen vorangehend genannten Geräten ermöglicht das erfindungsgemäße Verfahren bei wiederholt auszuführenden Funktionen eine vereinfachte Bedienung und einen entsprechenden Komfortgewinn für den Benutzer.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: eine schematische Darstellung des Ablaufs eines erfindungsgemäßen Verfahrens,
- Figur 2:: eine erste Abwandlung des Verfahrens aus Figur 1, und
- Figur 3:: eine zweite Abwandlung des Verfahrens aus Figur 1.

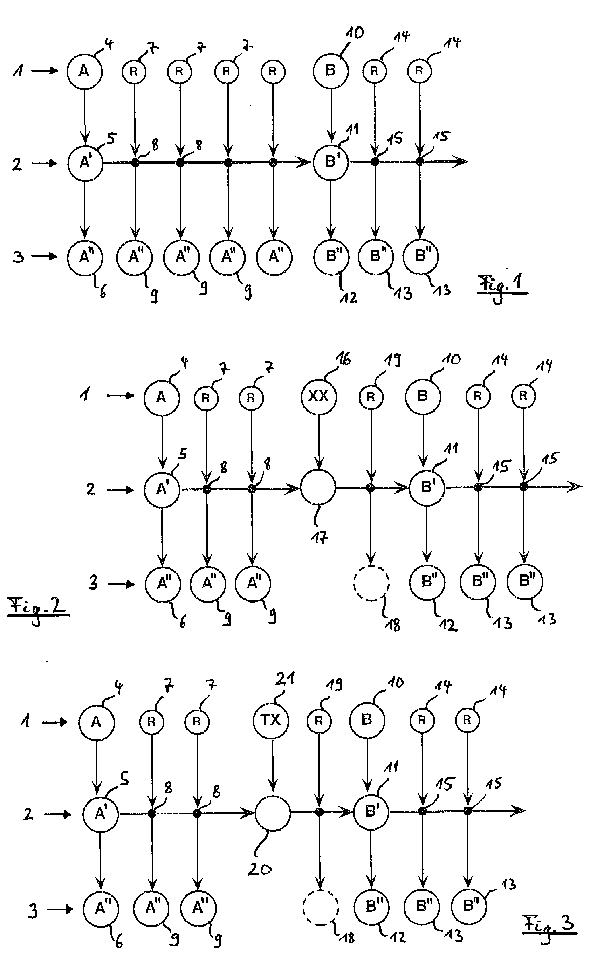

Bei dem in Figur 1 dargestellten Verfahren sind in der oberen Reihe 1 verschiedene Gesten A, B, R dargestellt, die ein Nutzer als Befehlseingabe mit einem Zeigemittel auf einem Touchscreen eines elektronischen Gerätes ausführt. In der mittleren Reihe 2 sind Schreib- und Lese-Vorgänge dargestellt, die das Gerät in einem Speicherbereich ausführt, und in der unteren Reihe 3 sind Funktionen A", B" dargestellt, die das Gerät nach Eingabe einer Geste A, B, R ausführt. Dabei sind die einzelnen Schritte in jeder Reihe 1-3 jeweils von links nach rechts über die Zeit forschreitend dargestellt.

Im Einzelnen laufen bei dem Verfahren folgende Schritte ab: Zuerst wird eine komplexe Bewegungsgeste A auf dem Touchscreen ausgeführt (Schritt 4). Als komplex wird hierbei eine Bewegungsgeste angesehen, die über ein kurzes Antippen des Touchscreens hinausgeht, also beispielsweise die Ausführung einer Wischbewegung oder ein Befehl, bei dem mit mehreren Fingerspitzen gleichzeitig bestimmte Berührungen und/oder Bewegungen ausgeführt werden. Der mit dieser Bewegungsgeste A verknüpfte Befehl A' wird sodann in dem Speicher gespeichert (Schritt 5) und die entsprechende Funktion A" wird von dem Gerät ausgeführt (Schritt 6).

Wenn der Benutzer danach eine einfache Berührungsgeste R ausführt (Schritt 7), bei der das Zeigemittel nach dem Aufsetzen auf den Touchscreen wieder entfernt wird, ohne auf dem Touchscreen eine Bewegungsgeste auszuführen, liest das Gerät den zuvor gespeicherten Inhalt A' des Speichers aus (Schritt 8) und führt die entsprechende Funktion A" erneut aus (Schritt 9). Zur erneuten Ausführung der Funktion A" muss also nicht die ursprüngliche Bewegungsgeste A erneut ausgeführt werden, sondern hierfür reicht ein einfaches kurzes Antippen R des Touchscreens aus. Diese erfindungsgemäß wiederholte Ausführung der Funktion A" kann durch mehrfach wiederholtes Antippen R des Touchscreens beliebig oft veranlasst werden.

Sobald der Benutzer allerdings den Touchscreen berührt und darauf eine andere komplexe Bewegungsgeste B ausführt (Schritt 10), wird der mit dieser Bewegungsgeste B verknüpfte Befehl B' in den Speicher geschrieben (Schritt 11) und die entsprechende Funktion B" von dem Gerät ausgeführt (Schritt 12). Anschließend kann dann diese Funktion B" beliebig oft wiederholt ausgeführt werden (Schritt 13), indem der Touchscreen wieder durch einfaches Antippen R berührt (Schritt 14) und der nunmehr geänderte Inhalt B' des Speichers ausgelesen wird (Schritt 15). Das Beenden der Wiederholung einer bestimmten Funktion A" erfolgt hier also durch Ausführung einer neuen komplexen Bewegungsgeste B.

Bei der in Figur 2 dargestellten Abwandlung erfolgt das Beenden der Wiederholung einer bestimmten Funktion A" hingegen durch die Eingabe eines speziellen Beendigungsbefehls XX (Schritt 16). Bei Eingabe dieses Befehls XX, beispielsweise durch Antippen eines Abbruch-Buttons, wird der Inhalt des für die erfindungemäße Wiederholungsfunktionalität vorgesehenen Speichers gelöscht (Schritt 17). Ein zuvor darin abgespeicherter Befehlt A', welcher der zuletzt ausgeführten komplexen Bewegungsgeste A entspricht, steht dann nicht mehr zur Verfügung, so dass keine Funktion mehr ausgeführt wird (Schritt 18), wenn der Benutzer danach eine einfache Berührungsgeste R ausführt (Schritt 19).

Erst bei der folgenden Eingabe einer weiteren komplexen Bewegungsgeste B (Schritt 10) wird der hiermit verknüpfte Befehl B' in den Speicher geschrieben (Schritt 11), so dass die entsprechende Funktion B" anschließend wieder durch einfaches Antippen R des Touchscreens (Schritt 14) beliebig oft wiederholt ausgeführt werden kann (Schritt 13).

Eine dritte Möglichkeit zum Beenden der Funktionswiederholung ist in Figur 3 dargestellt, wo der Abbruch der Wiederholung einer Funktion A" in Abhängigkeit von der Zeit erfolgt. Dabei wird der Inhalt des Speichers automatisch gelöscht (Schritt 20), wenn innerhalb einer vorbestimmten Höchstzeitdauer TX seit der letzten Eingabe einer Geste A, B, R keine weitere Geste auf dem Touchscreen ausgeführt wird (Schritt 21). Ebenso wie bei der in Figur 2 dargestellten Möglichkeit steht dann ein zuvor im Speicher abgespeicherter Befehlt A', der der zuletzt ausgeführten komplexen Bewegungsgeste A entspricht, nicht mehr zur Verfügung, so dass keine Funktion mehr ausgeführt wird (Schritt 18), wenn der Benutzer nach Ablauf der Zeitdauer TX seit der vorherigen Eingabe der Geste A (Schritt 4) oder der Antipp-Geste R (Schritt 7) eine einfache Berührungsgeste R ausführt (Schritt 19).

Auch hier kann die erfindungemäße Wiederholungsfunktionalität anschließend wieder erneut gestartet werden, indem die zuletzt ausgeführte Geste A oder eine weitere komplexe Bewegungsgeste B ausgeführt wird. Diese Eingabe der Bewegungsgeste B (Schritt 10) bewirkt einerseits wiederum die Speicherung des hiermit verknüpften Befehls B' (Schritt 11) sowie die erstmalige Ausführung der entsprechenden Funktion B" (Schritt 12), und andererseits auch das erneute Starten der Zeiterfassung, anhand derer bei Erreichen der Höchstzeitdauer TX der Speicher wieder gelöscht wird, sobald diese Zeitdauer TX wieder ohne Berührung des Touchscreens verstrichen ist.

## Patentansprüche

1. Verfahren zur Eingabe von Befehlen (A', B') und zur Ausführung von mit den Befehlen (A', B') verknüpften Funktionen (A", B") eines elektronischen Gerätes, insbesondere eines Computers oder eines mobilen Endgerätes, wobei die Befehlseingabe durch Berührung (A, B, R) einer berührungssensitiven Eingabeoberfläche des Gerätes mit einem Zeigemittel erfolgt,
**dadurch gekennzeichnet,**
**dass** eine durch Ausführung zumindest einer Bewegungsgeste (A, B) auf der Eingabeoberfläche ausgelöste Funktion (A", B") des Gerätes erneut ausgeführt wird, wenn die Eingabeoberfläche danach mit dem Zeigemittel berührt und das Zeigemittel ohne Ausführung einer Bewegungsgeste auf der Eingabeoberfläche wieder von der Eingabeoberfläche entfernt wird (R).

2. Verfahren nach Anspruch 1, **dadurch gekennzeichnet, dass** die zuvor durch mindestens eine Bewegungsgeste ausgelöste Funktion (A", B") nur dann erneut ausgeführt wird, wenn die Eingabeoberfläche innerhalb einer vorgegebenen oder vorgebbaren Höchstzeitdauer (TX) berührt wird (R).

3. Verfahren nach Anspruch 1 oder 2, **dadurch gekennzeichnet, dass** die zuvor durch mindestens eine Bewegungsgeste ausgelöste Funktion (A", B") erneut ausgeführt wird, wenn die Eingabeoberfläche angetippt wird (R), ohne dabei eine Bewegungsgeste auf der Eingabeoberfläche auszuführen.

4. Verfahren nach Anspruch 1 oder 2, **dadurch gekennzeichnet, dass** die zuvor durch mindestens eine Bewegungsgeste (A, B) ausgelöste Funktion (A", B") erneut ausgeführt wird, wenn die Eingabeoberfläche länger als eine erste vorbestimmte oder vorgebbare Mindestzeitdauer berührt wird, ohne während der Berührung eine Bewegungsgeste auf der Eingabeoberfläche auszuführen.

5. Verfahren nach Anspruch 4, **dadurch gekennzeichnet, dass** die zuvor durch mindestens eine Bewegungsgeste (A, B) ausgelöste Funktion (A", B") mehrfach wiederholt ausgeführt wird, wenn die Eingabeoberfläche länger als eine zweite vorbestimmte oder vorgebbare Mindestzeitdauer berührt wird.

6. Verfahren nach einem der vorherigen Ansprüche, **dadurch gekennzeichnet, dass** die zuvor durch mindestens eine Bewegungsgeste (A, B) ausgelöste Funktion (A", B") nur dann erneut ausgeführt wird, wenn die Eingabeoberfläche danach mit dem Zeigemittel innerhalb eines vorgegebenen Feldes berührt wird.

7. Verfahren nach Anspruch 6, **dadurch gekennzeichnet, dass** mehrere Felder vorgegeben sind, die jeweils mit einer unterschiedlichen Anzahl von Wiederholungen der zuvor ausgelösten Funktion (A", B") verknüpft sind.

8. Verfahren nach einem der vorherigen Ansprüche, **dadurch gekennzeichnet, dass** für die Beendigung der Wiederholungsfunktionalität ein Feld oder eine Taste (XX) vorgesehen ist, nach dessen Berührung oder Betätigung eine zuvor durch eine Bewegungsgeste (A, B) ausgelöste Funktion (A", B") nicht mehr wiederholt wird, wenn die Eingabeoberfläche berührt und ohne Ausführung einer Bewegungsgeste wieder verlassen wird.

9. Elektronisches Gerät mit einer berührungssensitiven Eingabeoberfläche und einem Prozessor, **dadurch gekennzeichnet, dass** der Prozessor zur Durchführung des Verfahrens nach einem der Ansprüche 1 bis 8 konfiguriert ist.

10. Elektronisches Gerät nach Anspruch 9, **dadurch gekennzeichnet, dass** es ein Computer, insbesondere ein tragbarer Computer ist.

11. Elektronisches Gerät nach Anspruch 9, **dadurch gekennzeichnet, dass** es eine Kommunikationsvorrichtung, insbesondere ein Mobiltelefon ist.
